# EUROPEAN PATENT SPECIFICATION

(11) **EP 2 072 708 B1**
(45) Date of publication and mention of the grant of the patent: **20.04.2011**
(21) Application number: 07425803.9
(22) Date of filing: 18.12.2007
(51) Int. Cl.: E04D 1/30, H01L 31/048

(54) **Panel structure for roofs and the like**
Paneelstruktur für Dächer und Ähnliches
Structure de panneau pour toits et similaires

(43) Date of publication of application: 24.06.2009
(73) Proprietor: Maspi S.r.L., 24030 Terno D'Isola (BG) (IT)
(72) Inventor: Mazzilli, Mario, 24030 Villa D'Adda Bergamo (IT)
(74) Representative: Lunati, Vittoriano

(56) References cited:
- DE-A1- 10 136 037
- DE-A1-102004 026 786
- JP-A- 11 131 735
- JP-A- 2006 104 852
- NL-C2- 1 009 039
- US-A1- 2006 225 780

## Description

The present invention relates to a panel structure for roofs and the like of the type described in the preamble of claim 1.

There are currently known panels for roofs and the like, in particular solar panels, suitable to produce electrical energy or water at high temperatures from sunlight, skylights, windows and still other types of panel.

In particular, solar panels are usually positioned on top of roof coverings, such as tiles or the like, which ensure the watertightness and thermal insulation of this roof.

Other types of panels, such as skylights, instead require a structural modification to the roof surface.

The known art has some important drawbacks, in particular with regard to solar panels.

In fact, when the solar panels are positioned on roofs including roofing tiles, they are preferably secured to the same beams or structures on which the tiles are disposed. Consequently, these panels create breaks in the arrangement realized by the tiles, through which rainwater can enter.

Moreover, solar panels positioned over the tiles realize a visual irregularity of the roof, detracting from the aesthetic appearance thereof.

Due to the drawbacks described, often solar panels are not fitted to roofs of villas or houses equipped with tiles of traditional type and which are not designed in advance for integration with solar panels.

To overcome the aforesaid drawbacks it is possible to position the solar panel between the tiles and not on top of them, so that this panel does not realize a visual irregularity for the roof on which it is positioned. In this case, the panels must have precise dimensions.

These dimensions are however dictated by the number and by the dimension of the individual photovoltaic cells of which the panel is composed and therefore cannot be selected randomly.

Moreover, in the case described, this panel realizes a noteworthy structural irregularity of the roof that allows rainwater to enter.

It is therefore necessary to provide for this by placing a tank under the roof, which implies both structural problems and an increase in costs.

A further drawback is given by the fact that, unlike traditional tiled roofs, often solar panels do not allow air to flow under the roof.

Consequently, these solar panels often reach temperatures of over 30°C, which cause a decrease in the efficiency of the panels.

Another drawback of said panels is realized by the "sail effect" that they cause in the presence of winds. Said sail effect leads to the formation of forces that can cause the panel to be uprooted.

Said drawbacks could be partially overcome by a panel structure described in patent applications JP-A-1131735, DE-A-101 36 037 and JP 2006 104852. The latter discloses a panel structure according to the preamble of claim 1.

NL 1009039 C2 shows the integration of a solar panel in a roof with corrugated tiles. In this situation the technical aim underlying the present invention is to devise a panel structure for roofs and the like capable of substantially overcoming the aforesaid drawbacks.

Within this technical aim, an important object of the invention is to obtain a panel structure, in particular a solar panel, for roofs and the like that can be integrated visually with a roof covered with tiles or the like.

Another important object of the invention is to produce a panel structure for roofs and the like that ensures the conventional functions of the roof and in particular the evacuation of rainwater.

A further object of the invention is to devise a panel structure for roofs and the like capable of being integrated dimensionally with any type of tile, irrespective of the dimensions of the panel.

Yet another object of the invention is to produce a panel structure for roofs and the like capable of allowing correct thermal insulation of the roof and correct air flow under and over this roof, preventing the aforesaid sail effect. Last but not least object of the invention is to obtain an inexpensive panel structure for roofs and the like.

The technical aim and the objects specified are achieved by a panel structure for roofs and the like as claimed in the appended claim 1.

Preferred embodiments are specified in the subclaims.

Further features and advantages of the invention are better explained below in the detailed description of a preferred embodiment of the invention, with reference to the attached drawings, wherein:
**Fig. 1** shows an application of the device according to the invention;
**Fig. 2** shows a first portion of the device according to the invention:
**Fig. 3a** shows a first detail of the device according to the invention;
**Fig. 3b** shows a second detail of the device according to the invention;
**Fig. 3c** shows a third detail of the device according to the invention;
**Fig. 3d** shows a fourth detail of the device according to the invention;
**Fig. 4a** shows an element positioned below the panel;
**Fig. 4b** shows an element positioned above the panel;
**Fig. 4c** shows an element positioned to the right of the panel;
**Fig. 4d** shows an element positioned to the left of the panel;
**Fig: 4e** shows an element positioned in the lower right corner of the panel;
**Fig. 4f** shows an element positioned in the lower left corner of the panel;
**Fig. 4g** shows an element positioned in the upper right corner of the panel;
**Fig. 4h** shows an element positioned in the upper left corner of the panel;
**Fig. 5a** shows a first section of a detail of the device according to the invention;
**Fig. 5b** shows a first section of a detail of the device according to the invention; and
**Fig. 5c** shows a first section of a detail of the device according to the invention;

With reference to the aforesaid figures, the panel structure for roofs and the like according to the invention is indicated as a whole with number **1.**

It is positioned on a pitched roof **10** including a covering **11** of tiles **12,** and in particular a covering of traditional tiles known with the names bent tiles, Portuguese tile or Marseilles tile.

The covering 11 is positioned on a specific base **13** which can be realized by trusses made of wood, concrete or other construction materials, or yet again by a continuous surface or the like.

As it is known, the term pitched roof 10 defines the covering surface of a building realized by one or more flat faces inclined with respect to the horizontal plane, called pitched or sloping.

The pitched roof 10, and the covering 11, are suitable to allow rainwater and other atmospheric agents, such as snow and hail or any other element that can come into contact with the roof 10, to flow on top of the covering **11** in a direction of flow **10a.**

In particular, in coverings 11 produced with traditional tiles 12, these tiles 12 are overlapped so that rainwater or the like flowing thereover cannot seep under the tiles 12.

In fact, the tile 12 are disposed so that the upper tile, disposed vertically over the lower tile, partly overlaps the lower tile, and moreover the right tile, disposed horizontally at the side of the left tile, partly overlaps the left tile, or vice versa.

Other types of tiles 12 of traditional type can have a different arrangement thereof, in particular "bent" tiles can be disposed with the concavity facing upward or downward, but all the arrangements of tiles 12 of traditional type are based on the principle of the upper tile partly overlapping the lower tile. Moreover, thanks to the solutions described, coverings 11 including tiles 12 of traditional type allow air to flow in a horizontal direction under the covering 11, so as to maintain a suitable temperature at the level of this roof 10.

Moreover, to realize the covering 11, these tiles 12 do not require to be connected through constraining means to the roof 10, and in particular to the base 13, but simply positioned correctly on the roof 10. Therefore no sealant means or the like are necessary. In some cases, however, constraining means are positioned between the tiles 12 and the roof 10 or sealant means to withstand particular weather conditions or to increase the durability of the covering 11.

The structure of the solar device 1 comprises, in brief, a panel 2, which can be positioned on the pitched roof 10, and in particular on the base 13, and an interface apparatus **3** which can be disposed along the perimeter of said solar panel 2.

The panel 2 can be realized by a solar panel, such as a photovoltaic panel or the like, by a transparent panel, realizing a skylight or the like. In particular, the present structure is particularly advantageous for the application of solar panels and more in particular of photovoltaic panels.

The structure 1 is also suitable to maintain the watertightness of the covering 11 against rainwater or the like in the same direction of flow 10a determined by the slope of the pitched roof 10.

In particular, the interface apparatus 3 is suitable to be positioned on the base 13 so as to ensure watertightness and allow rainwater or the like to flow between the tiles 12 and the interface apparatus 3.

Also in the present case, watertightness and flow of rainwater between the interface apparatus 3 and the tiles 12 are ensured simply by correct positioning of this apparatus 3 on the pitched roof 10, and in particular on the base 13.

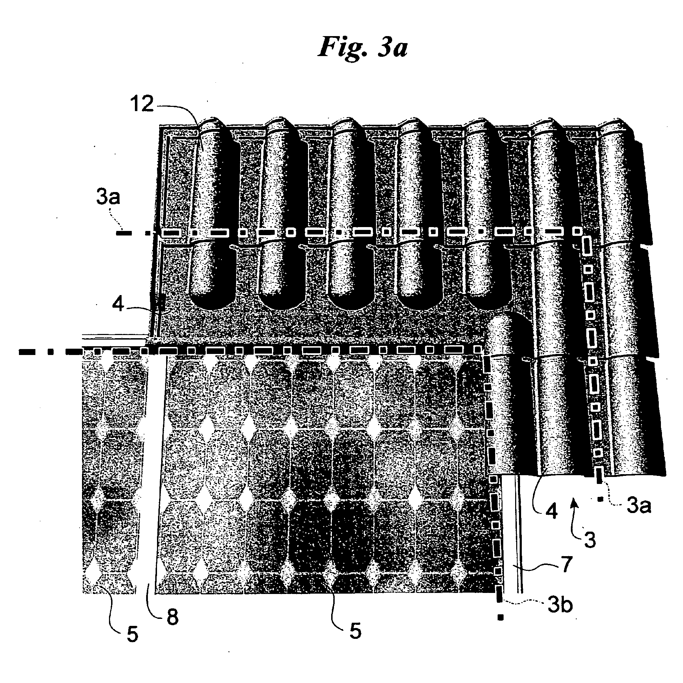

For this purpose, the interface apparatus 3 comprises an outer edge **3a** counter-shaped to the tiles 12 as shown in Figs. 3a - 3d.

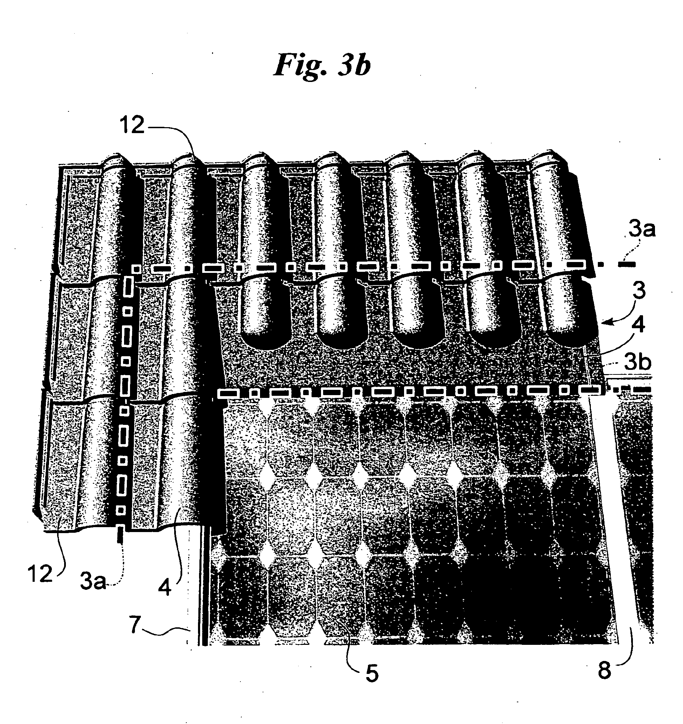

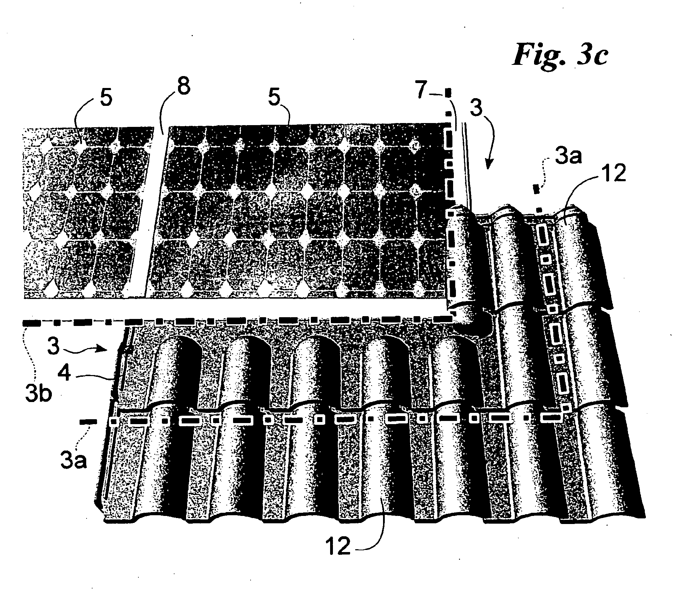

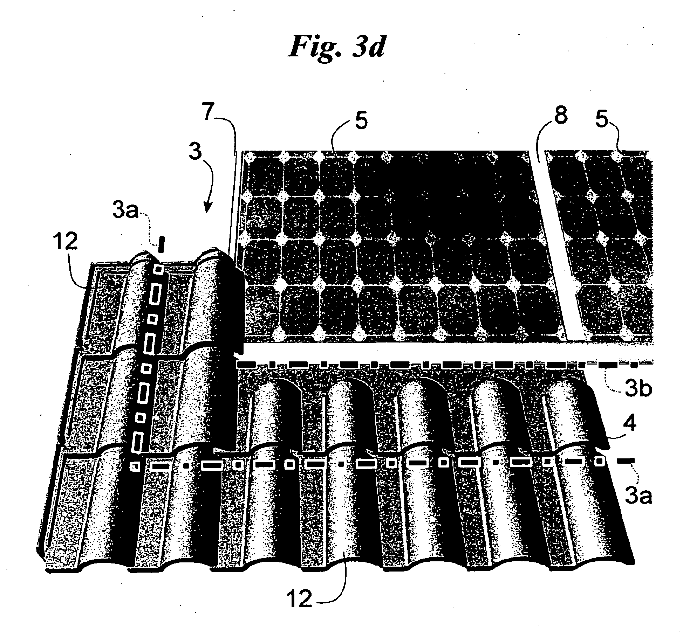

The apparatus 3 is therefore suitable to at least partly overlap the tiles 12. In particular, where the interface apparatus 3 is contiguous with one or more tiles 12, positioned below the apparatus 3 in the plane of extension of the covering 11, this interface apparatus 3 partly overlaps these tiles 12 (Figs. 3c and 3d). Equally, when the interface apparatus 3 is positioned below one or more tiles 12 in the plane of extension of the covering 11, these tiles 12 partly overlap this interface apparatus 3 (Figs. 3a and 3b).

The same occurs for tiles 12 disposed to the right and left of the interface apparatus 3 and this apparatus 3 with respect to the arrangement of the tiles 12. In particular, if the left tile 12 partly overlaps the right tile 12 then the interface apparatus 3 on the right side partly overlaps the adjacent tiles 12 (Figs. 3a and 3c) and on the left side is positioned under the adjacent tiles 12 (Figs. 3b and 3d).

Moreover, the solar panel 2 and the interface apparatus 3 are suitable to be reciprocally connected so as to ensure watertightness and allow rainwater or the like to flow, always on top of the pitched roof 10, between the solar panels 2 and the interface apparatus 3.

In particular, the solar panel 2 and the interface apparatus 3 can be reciprocally connected simply by means of correct positioning thereof, as described previously. In this case the interface apparatus 3 comprises an inner edge **3b** suitable to partly overlap, i.e. to partly rest on or to partly support, the panel 2.

Alternatively, they can be reciprocally connected by means of seals, sealants or the like.

In substance, the structure 1 presents features of watertightness or the like on top of the outer surface thereof when disposed on the roof 10 and the watertightness between the structure 1 and the roof 10 is ensured by the interface apparatus 3.

In particular, the interface apparatus 3 comprises a plurality of interface elements **4** that can be reciprocally joined. It can thus be assembled and disposed according to the dimensions of the solar panel 2.

Preferably, these interface elements 4 can be reciprocally joined by means of simple reciprocal positioning on the same pitched roof 10.

The interface elements 4 also comprise a plurality of correct and stable positions, so that the interface apparatus 3 is adaptable to the tiles **12.**

Moreover, this interface apparatus 3 preferably presents a shape and external aesthetic features similar to the aesthetic features and shape of a group of tiles 12 of traditional type and in particular of the type of tiles 12 disposed on the base 13 of the roof 10 on which the structure 1 is positioned.

The panel 2 is preferably composed of a plurality of modules **5,** above all if this is a photovoltaic solar panel.

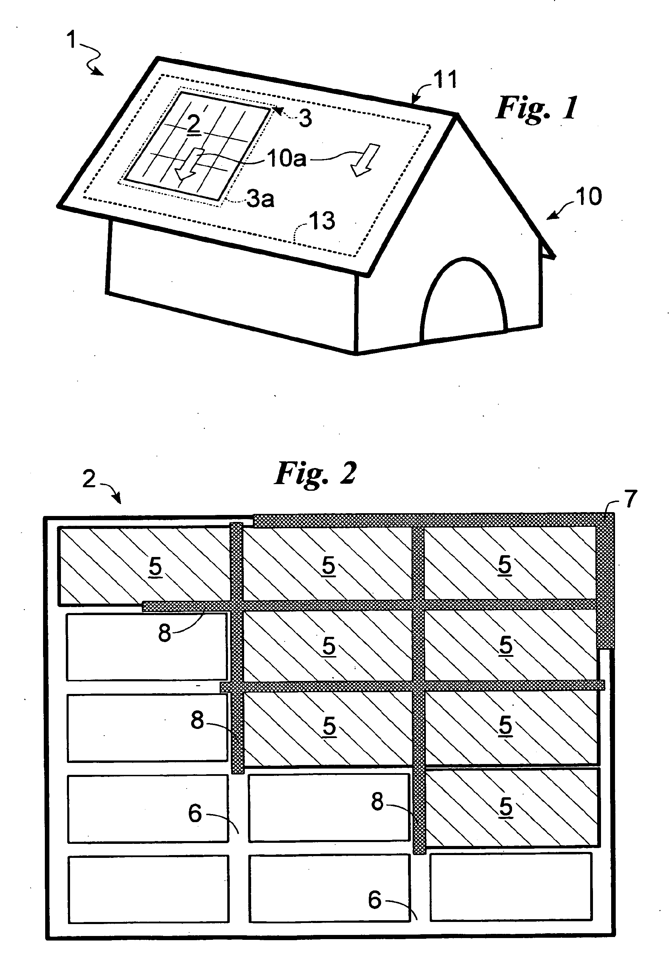

Moreover, it appropriately comprises a supporting frame **6,** suitable to support the modules 5, and peripheral profiles **7** connected to the frame 6 along the outer edges of the panel 2, as shown in Fig. 2:

More in particular, the supporting frame 6 comprises inner beams disposed perpendicularly along the boundaries of each module 5.

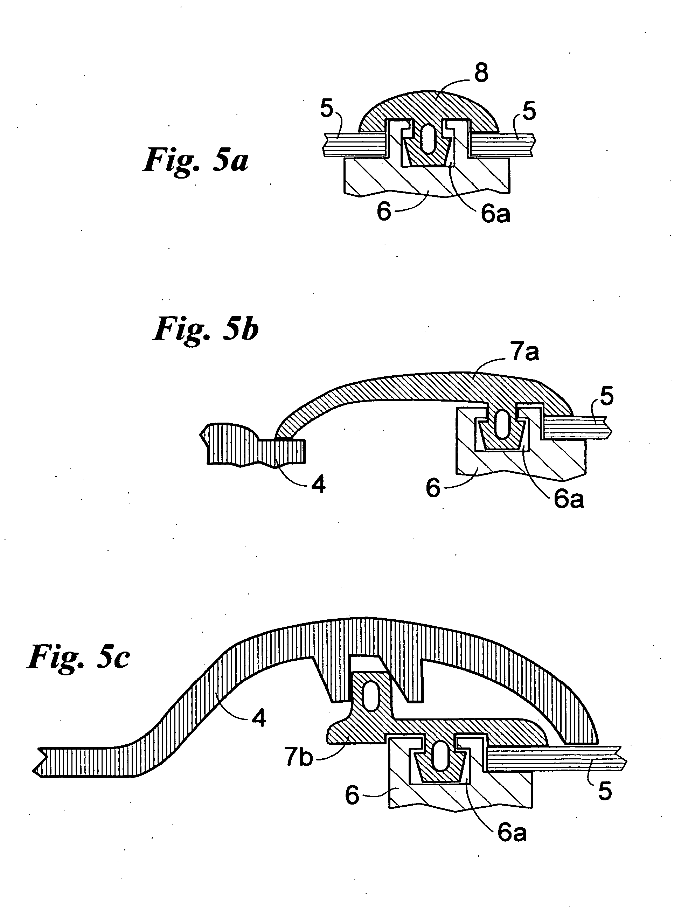

Moreover, the same supporting frame 6 comprises openings **6a** suitable to allow housing and interconnection of connection elements **8** having the function of reciprocally constraining at least two modules 5 and of ensuring watertightness in the direction of flow 10a of rainwater, as shown, for example, in the section in Fig. 5a.

For this purpose, said connection elements **8** are produced in flexible polymer material and substantially produce peals.

The peripheral profiles **7** instead have the function of ensuring watertightness between the interface apparatus 3 and the panel 2.

In particular, the lower peripheral profile **7a**, shown in section in Fig. 5b, comprises an element suitable to interlock with an opening 6a of the supporting frame 6 and a lower portion suitable to be disposed on top of the upper portion of the interface apparatus 3, while the lateral peripheral profile 7b, shown in section in Fig. 5c, comprises an element suitable to interlock with an opening 6a of the supporting frame 6 and an element suitable to interlock with a lateral portion of the interface apparatus 3.

The figures show an example of an assembly of interface elements 4 suitable to produce an interface apparatus 3 that can be integrated with a covering 11 including Portuguese type tiles 12.

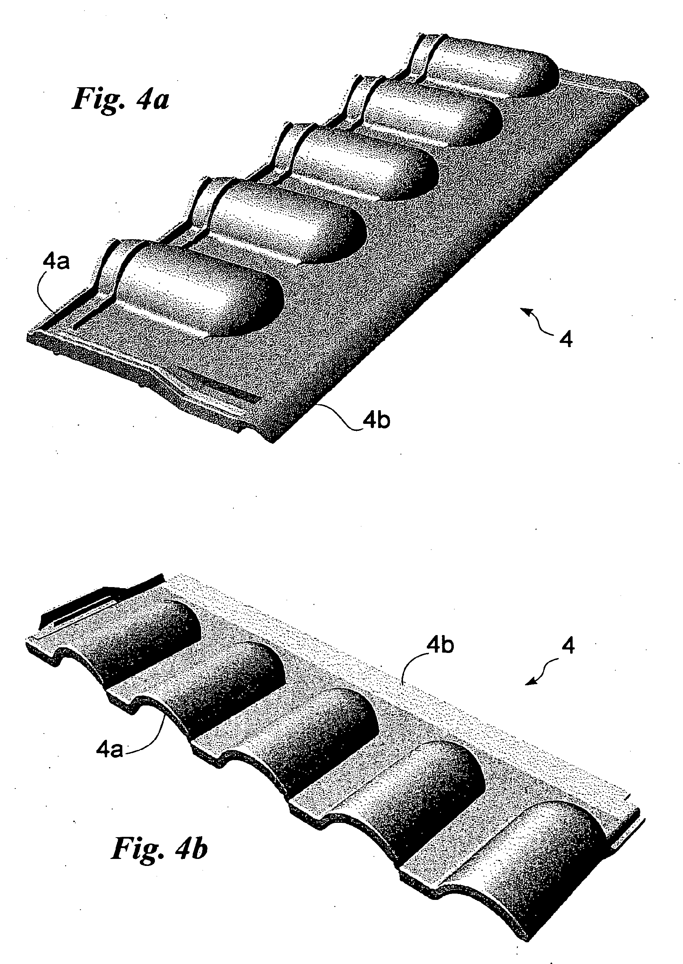

In particular, Fig. 4a shows the interface element 4 that is positioned above the solar panel 2 and that partly overlaps this panel as shown in Figs. 3a and 3b.

Fig. 4b shows the interface element 4 that is positioned below the panel 2 and that is partly positioned under this panel 2 and in particular under the lower peripheral profile 7a, as shown in Figs. 3c, 3d and 5b.

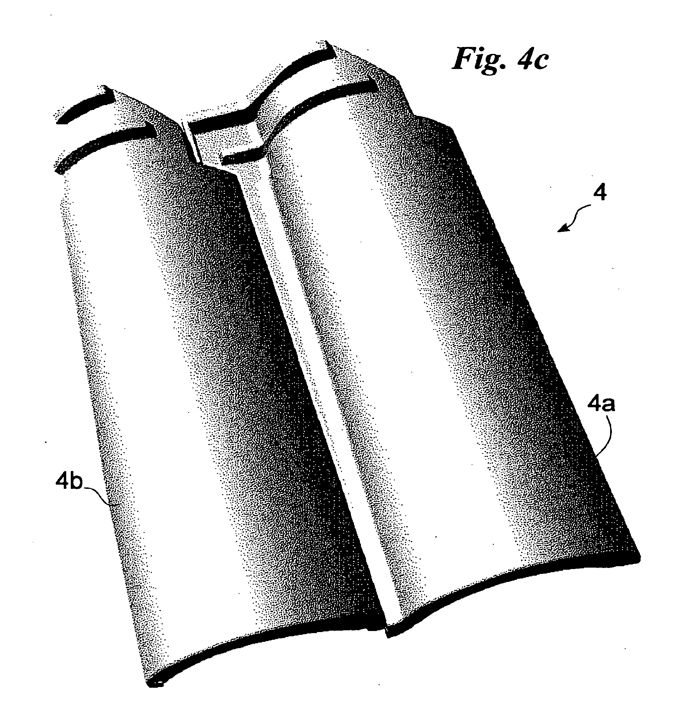

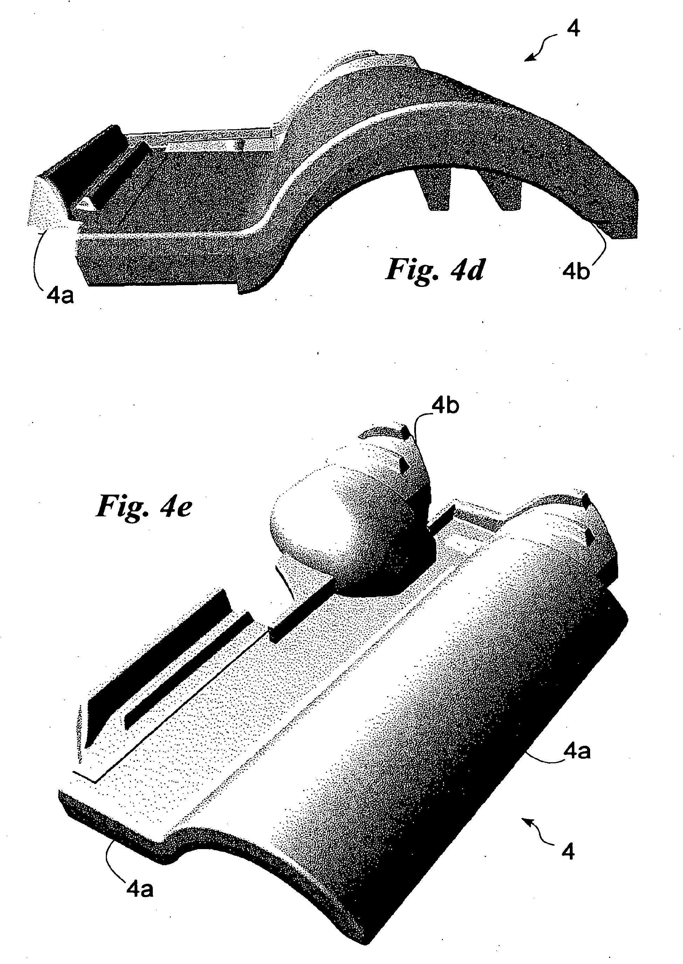

Figs. 4c and 4d show the elements 4 that are positioned to the right and left of the panel 2 and that partly overlap this panel (fig. 3a - 3d).

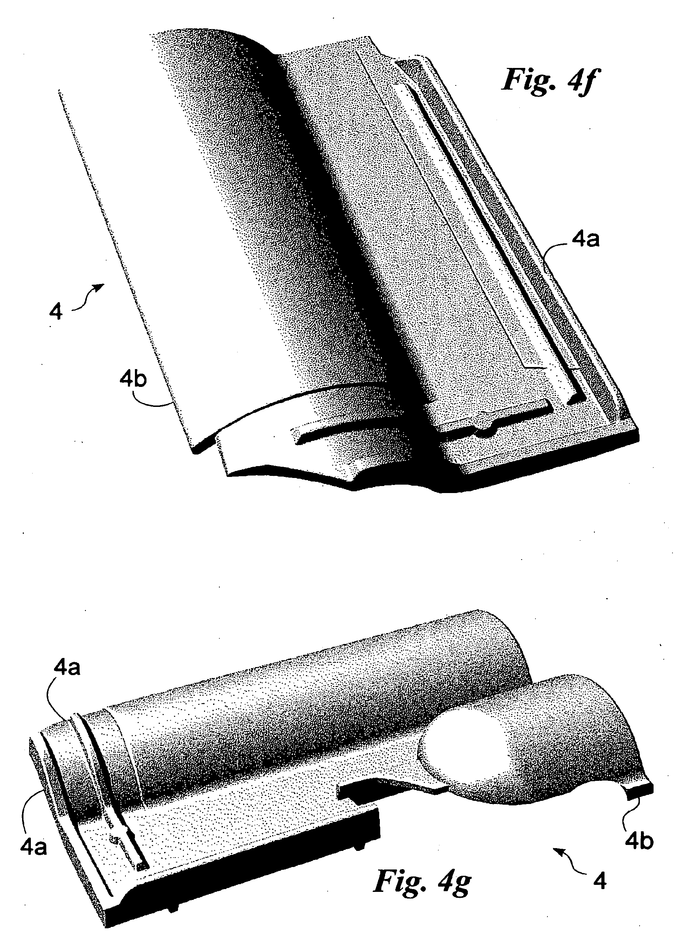

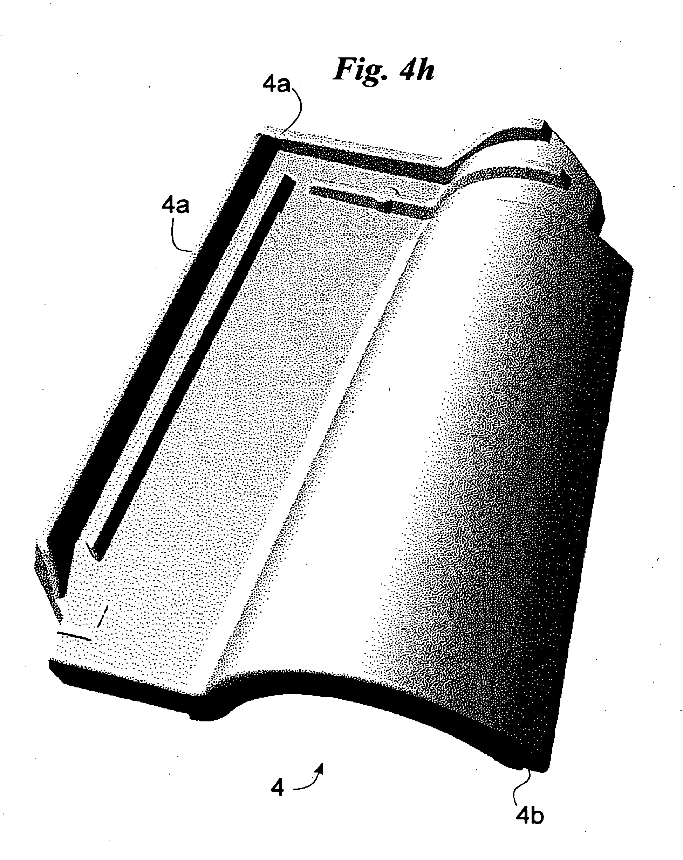

Finally, Figs, 4e - 4h respectively show the interface elements 4 that are positioned in the comers: in the bottom right (Figs. 3c and 4e), in the bottom left (Figs. 3d and 4f), in the top right (Figs. 3a and 4g) and in the top left (Figs. 3b and 4h) of the solar panel 2.

In Figs. **3a** - 3d it is also possible to observe how simple juxtaposing of the interface elements 4 of the panel 2 ensures correct watertightness of the structure 11 to rainwater or the like. In some cases it is however appropriate to seal, by means of silicone or the like, the element 4 disposed on the top right (Fig. 4g) under which water could infiltrate.

The interface elements 4 shown also comprise a plurality of profiles and recesses suitable to ensure that the lateral elements 4 (Figs. 4c and 4d) have a reciprocal vertical distance that can be selected on the basis of the reciprocal distance of the tiles 12.

Moreover, the horizontal elements 4 (Figs 4a and 4b) have the aesthetic appearance of a row of tiles 12 whose width is identical to the width of a single solar module 5, to simplify assembly of a horizontal element 4 for each solar module 5.

Finally, the interface elements 4 are appropriately made of polymer material and preferably produced through a process to co-inject a foamed material inside a compact material.

The invention thus also teaches the production of an interface element 4, suitable to produce the interface structure 3.

Therefore, it is suitable to be positioned on a pitched roof 10 including a covering 11 of tiles 12 disposed on a base 13 and suitable to ensure watertightness and allow the flow of rainwater or the like and a panel 2, and comprises an outer edge **4a** counter-shaped to the tiles 12 and suitable to partly overlap at least one tile 12 so as to ensure watertightness and flow of rainwater or the like between the tiles 12 and the interface element 4, and an inner edge **4b** suitable to partly overlap at least part of the panel 2 so as to ensure watertightness and allow rainwater or the like to flow between the panel 2 and the interface element 4.

Operation of a panel structure for roofs and the like 1 with the above-described structural design is as follows.

For assembly of a panel structure for roofs and the like 1, first of all the dimension of the panel 2 is selected on the basis of the dimensions of the roof 10 or for other, requirements.

The panel 2 is then assembled.

A supporting frame 6 of suitable dimensions is provided and the single modules 5 are positioned thereon; finally, these modules are secured to the frame 6 by means of the connection elements 8 and the peripheral profiles 7.

The roof 10 is then prepared to receive the structure 1 and a certain number of tiles 12, corresponding to the area of surface occupied by this structure 1, are removed.

The panel 2 is then positioned on the base 13 of the roof 10.

Subsequently, the interface elements 4 are positioned, as shown in Figs. 3a -3d, to allow production of a roof that is watertight against rainwater and the like and including a panel 2.

In particular, the interface elements 4 are positioned so as to comply with the vertical pitch of the tiles 12 present on the covering 11.

It is also possible that some of the interface elements 4 are connected to the panel 2 by means of specific seals or the like. In particular, the interface element 4 positioned at the top right of the panel 2 (Fig. 4g) can be connected in phase to this panel by means of a silicone sealant or the like.

In the subsequent assembly step, the structure 1 can be regularly utilized and the panel 2 can produce electrical energy when illuminated with sunlight.

The invention achieves important advantages.

In fact, the structure 1 ensures the conventional function of the roof 10 including tiles 12.

This roof 10 including a structure 1 in fact allows rainwater or other atmospheric agents to flow on top of the covering 11 without allowing water to pass to the inside.

To ensure said watertightness, the structure 1 makes use of the same principle with which tiles 12 of traditional type are positioned.

This structure 1 therefore allows correct flow of air through the roof 10 and consequently correct thermal insulation thereof. Consequently, the panels 2, realized by solar panels, maintain temperatures of below 30°C in proximity of which improved efficiency of these solar panels 2 is achieved.

Moreover, again due to correct air flow, the sail effect, to which panels applied in a conventional manner above the surface of the roof are subject, is avoided. Furthermore, the structure 1 integrates aesthetically with the roof 10.

In fact, the interface apparatus 3 has the same aesthetic appearance as tiles of traditional type 12, while the panel 2 is positioned substantially on the same plane as the pitched roof 10, and therefore does not project or protrude from the surface of the covering 11.

A further advantage is given by the fact that the panel structure 1 has a dimension that can be selected and can integrate dimensionally with any type of roof 10 also by means of suitable positioning of the interface elements 4. Finally, the structure 1 is very simple, both to fabricate and to assemble, and therefore presents low purchase and assembly costs.

Due to the advantages described the structure 1 can be positioned on roofs 10 that have not been designed in advance for solar panels. In particular, it can also be positioned on old houses or villas without altering the aesthetic appearance thereof.

## Claims

1. Panel structure (1) for roofs (10) and the like suitable to be positioned on a pitched roof (10) including a covering (11) of tiles (12), said covering (11) being disposed on a base (13) and suitable to ensure watertightness and allow rainwater or the like to flow on top of said covering (11) in a direction of low (10a), said panel structure (1) comprising: a panel (2) that can be positioned on said pitched roof (10) and at least an interface apparatus (3) that can be disposed along the whole perimeter of said panel (2), said interface apparatus (3) being suitable to be positioned on said base (13) between said tiles (12) and said panel (2), said interface apparatus (3) comprising an outer edge (3a), which is counter-shaped to said tiles (12) along the whole perimeter of said interface apparatus (3) and which is suitable to partly overlap said tiles (12) so as to ensure said watertightness and allow rainwater or the like to flow over said tiles (12) and said interface apparatus (3), and said panel (2) and said interface apparatus (3) being suitable to be reciprocally connected so as to ensure said watertightness and allow rainwater or the like to flow on top of said panel (2) and said interface apparatus (3) in the direction of flow determined by the slope of the roof, said interface apparatus (3) externally has the structure of a group of said tiles (12), said interface apparatus (3) comprises a plurality of modular interface elements (4) to be disposed along the upper, the lower and the side edges of said panel (2), **characterised in that**, the modular interface elements (4) to be installed along the upper edge of said panel (2) comprises a substantially flat part along its lower edge to partly overlap the upper edge of the panel (2) and a corrugated part along its upper edge with several corrug a-tions extending in use parallel to the pitch of said roof (10) to partly be overlapped by corresponding corrugations of the tiles (12) positioned above said modular interface elements (4) to be installed along the upper edge of said panel (2), and the modular interface elements (4) to be installed along the lower edge of said panel (2) comprises a substantially flat part along its upper edge to be partly overlapped by the upper edge of the panel (2) and a corrugated part along its lower edge with several corrugations extending in use parallel to the pitch of said roof (10) to partly overlap corresponding corrugations of the tiles (12) positioned below said modular interface elements (4) to be installed along the lower edge of said panel (2).

2. Structure according to claim 1, wherein said interface elements (4) are assemblable by simple positioning on said pitched roof (10).

3. Structure according to claim 2 or 3, wherein said panel (2) and said interface elements (4) are connectable by simple positioning on said pitched roof (10).

4. Structure according to one or more of the preceding claims, wherein said pa nel (2) comprises a module (5), a supporting frame (6), suitable to support said module (5), and peripheral profiles (7) connectable to said frame (6) along the outer edges of said panel (2).

5. Structure according to claim 4, comprising a plurality of said modules (5), and a plurality of connection elements (8) realized substantially by seals connectable to said frame (6) and suitable to reciprocally constrain at least two of said modules (5) and to ensure said watertightness and allow rainwater or the like to flow between said reciprocally constrained solar modules (5).

6. Structure according to one or more of the preceding claims, wherein said panel (2) lies substantially on the same plane as said pitched roof (10).

7. Pitched roof (10) including a panel structure for roofs and the like (1) according to one or more of the preceding claims.

## Patentansprüche

1. Paneelstruktur (1) für Dächer (10) und Ähnliches, geeignet, um auf ein Satteldach (10) gelegt zu werden, das eine Bedeckung (11) aus Dachziegeln (12) umfasst, wobei besagte Bedeckung (11) auf einer Basis (13) angeordnet ist und geeignet ist, Regenwasser oder etwas anderes über besagter Bedeckung (11) aufzufangen und in eine Fließrichtung (10a) abfließen zu lassen, wobei besagte Paneelstruktur (1) Folgendes umfasst: ein auf besagtem Satteldach (10) positionierbares Paneel (2), mindestens einen längs des Umfangs des besagten Paneels (2) verfügbaren Verbindungsapparat (3), wobei besagter Verbindungsapparat (3) geeignet ist, auf besagte Basis (13) zwischen besagte Dachziegel (12) und besagtes Paneel (2) positioniert zu werden, wobei besagter Verbindungsapparat (3) einen Außenrand (3a) umfasst, der längs des gesamten Umfangs des besagten Verbindungsapparates (3) den besagten Dachziegeln (12) entgegengeformt ist, und geeignet ist, sich teilweise mit besagten Dachziegeln (12) zu überlappen, sodass besagtes Auffangen und Abfließen von Regenwasser oder etwas anderem zwischen besagten Dachziegeln (12) und besagtem Verbindungsapparat (3) gewährleistet wird, wobei besagtes Paneel (2) und besagter Verbindungsapparat (3) geeignet sind, miteinander verbunden zu werden, sodass besagtes Auffangen und Abfließen von Regenwasser oder etwas anderem auf den Flächen des besagten Paneels (2) und des besagten Verbindungsapparates (3) in der von der Neigung des Dachs festgelegten Fließrichtung erlaubt wird, wobei besagter Verbindungsapparat (3) im Außenbereich die Struktur einer Gruppe von Dachziegeln (12) aufweist, und besagter Verbindungsapparat (3) eine Vielzahl von zusammensetzbaren Verbindungselementen (4) umfasst, die längs der oberen, unteren und seitlichen Außenränder des besagten Paneels (2) angeordnet werden müssen, **gekennzeichnet durch** die Tatsache, dass die zusammensetzbaren Verbindungselemente (4), um längs des oberen Randes des besagten Paneels (2) angeordnet zu werden, einen im Wesentlichen flachen Teil (3) längs ihres unteren Randes umfassen, um sich teilweise mit dem oberen Rand des besagten Paneels (2) zu überlappen, und, um längs des oberen Teils des besagten Paneels (2) installiert zu werden, einen gewölbten Teil längs ihres oberen Randes mit zahlreichen Auswölbungen umfassen, die sich bei Verwendung parallel zur Neigung des besagten Daches (10) ausdehnen, um teilweise mit den entsprechenden Auswölbungen der auf die besagten modularen Verbindungselemente (4) positionierten besagten Dachziegel (12) überlappt zu werden, und besagte modulare Verbindungselemente (4), um längs des unteren Randes des besagten Paneels (2) installiert zu werden, einen im Wesentlichen flachen Teil längs ihres oberen Randes umfassen, um teilweise mit dem unteren Rand des besagten Paneels (2) überlappt zu werden, und, um längs des oberen Teils des besagten Paneels (2) installiert zu werden, einen gewölbten Teil längs des oberen Randes (4) mit zahlreichen Auswölbungen umfassen, die sich bei Verwendung parallel zur Neigung des besagten Daches (10) ausdehnen, um teilweise mit den entsprechenden Auswölbungen der unter die besagten modularen Verbindungselemente (4) positionierten besagten Dachziegel (12) überlappt zu werden.

2. Struktur gemäß Anspruch 1, bei der besagte Verbindungselemente (4) durch einfaches Positionieren auf besagtem Satteldach zusammenzusetzen sind (10).

3. Struktur gemäß den Ansprüchen 2 oder 3, bei der besagtes Paneel (2) und besagte Verbindungselemente (4) durch einfaches Positionieren auf besagtem Satteldach (10) zu verbinden sind.

4. Struktur gemäß einem oder mehreren der vorhergehenden Ansprüche, bei der besagtes Paneel (2) mindestens ein Modul (5), einen Stützrahmen (6), der geeignet ist, besagtes Modul (5) zu stützen, und Randprofile (7) umfasst, die man mit besagtem Rahmen (6) längs der Außenränder des besagten Paneels (2) verbinden kann.

5. Struktur gemäß Anspruch 4, die eine Vielzahl der besagten Module (5) und eine Vielzahl von Verbindungselementen (8) umfasst, bestehend im Wesentlichen aus Abdichtungen, die man mit dem besagten Rahmen (6) verbinden kann, und die geeignet sind, mindestens zwei der besagten Module (5) aneinander anzukoppeln und besagtes Auffangen und Abfließen von Regenwasser oder etwas anderem zwischen den aneinander angekoppelten besagten Solarmodulen (5) zu gewährleisten.

6. Struktur gemäß einem oder mehreren der vorhergehenden Ansprüche, bei der besagtes Paneel (2) im Wesentlichen auf der gleichen Ebene ruht wie besagtes Satteldach (10).

7. Satteldach (10), das eine Paneelstruktur für Dächer und Ähnliches (1) einschließt gemäß einer oder mehrerer der vorhergehenden Ansprüche.

## Revendications

1. Structure de panneau (1) pour toits (10) et similaires apte à être mise sur un toit à pans (10) comprenant une couverture (11) de tuiles (12), ladite couverture (11) étant disposée sur une embase (13) et étant apte a permettre l'étanchéité et l'écoulement de l'eau de pluie ou autres, au-dessus de ladite couverture (11) dans une direction d'écoulement (10a), ladite structure de panneau (1) comprenant: un panneau (2) qui peut être positionné sur ledit toit à pans (10), au moins un appareil d'interface (3) disponible le long du périmètre dudit panneau (2), ledit appareil d'interface (3) étant apte a être positionné sur ladite embase (13) entre lesdites tuiles (12) et ledit panneau (2), ledit appareil d'interface (3) comprenant un bord extérieur (3a) dont la forme épouse celle desdites tuiles (12) le long de tout le périmètre dudit appareil d'interface (3) et apte à se superposer partiellement auxdites tuiles (12) de manière à assurer ladite étanchéité et ledit écoulement d'eau de pluie ou autres, entre les tuiles (12) et ledit appareil d'interface (3), ledit panneau (2) et ledit appareil d'interface (3) étant aptes à être reliés réciproquement pour permettre ladite étanchéité et ledit écoulement d'eau de pluie ou autres, sur les surfaces dudit panneau (2) et dudit appareil d'interface (3) dans la direction d'écoulement déterminée par l'inclinaison du toit, ledit appareil d'interface (3) ayant à son extérieur la structure d'un groupe de tuiles (12), ledit appareil d'interface (3) comprenant une pluralité d'éléments d'interface modulaires (4) qui doivent être disposés le long des bords supérieur, inférieur et latéraux dudit panneau (2), **caractérisée en ce que** les éléments d'interface modulaires (4) pour qu'ils soient disposés le long du bord supérieur dudit panneau (2) comprennent une partie essentiellement plate (3) le long de leur bord inférieur pour se superposer partiellement au côté supérieur dudit panneau (2) et une partie plissée le long de leur bord supérieur avec un grand nombre de plissements s'étendant, pendant l'usage, parallèles à l'inclinaison dudit toit (10) pour être partiellement superposés aux plissements correspondants desdites tuiles (12) positionnées au-dessus desdits éléments d'interface modulaires (4) pour être installés le long du côté supérieur dudit panneau (2), et lesdits éléments d'interface modulaires (4), pour qu'ils soient installés le long du côté inférieur dudit panneau (2), comprennent une partie essentiellement plate le long de leur côté supérieur pour qu'elle soit partiellement superposée au côté inférieur dudit panneau (2) et une partie plissée le long du côté supérieur (4) garnie d'un grand nombre de plissements s'étendant, pendant l'usage, parallèles à l'inclinaison dudit toit (10) pour qu'ils soient partiellement superposés aux plissements correspondants desdites tuiles (12) positionnées au-dessous desdits éléments d'interface modulaires (4) pour être installés le long du côté inférieur dudit panneau (2).

2. Structure selon la revendication 1, dans laquelle lesdits éléments d'interface (4) sont combinables par simple mise en place sur ledit toit à pans (10).

3. Structure selon la revendication 2 ou 3, dans laquelle ledit panneau (2) et lesdits éléments d'interface (4) peuvent être reliés réciproquement par simple mise en place sur ledit toit à pans (10).

4. Structure selon une ou plusieurs des revendications précédentes, dans laquelle ledit panneau (2) comprend au moins un module (5), un bâti support (6) apte à soutenir ledit module (5), et des profils périphériques (7) qui peuvent être reliés audit bâti (6) le long des bords extérieurs dudit panneau (2).

5. Structure selon la revendication 4, comprenant une pluralité desdits modules (5), et une pluralité d'éléments de liaison (8) comportant essentiellement des joints qui peuvent être reliés audit bâti (6) et sont aptes à lier réciproquement au moins deux desdits modules (5) et à assurer ladite étanchéité et ledit écoulement d'eau de pluie ou autres, entre lesdits modules solaires (5) liés réciproquement.

6. Structure selon une ou plusieurs des revendications précédentes, dans laquelle ledit panneau (2) est disposé essentiellement dans le même plan que ledit toit à pans (10).

7. Toit à pans (10) comprenant une structure de panneau pour toits et similaires (1) selon une ou plusieurs des revendications précédentes.
